# EUROPEAN PATENT APPLICATION

(11) **EP 4 600 485 A1**
(43) Date of publication of application: **13.08.2025**
(21) Application number: 24382123.8
(22) Date of filing: 08.02.2024
(51) Int. Cl.: F03D 1/06, F03D 17/00

(54) **SPAR CAP ASSEMBLY**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The invention describes a spar cap assembly (1) comprising a spar cap (20) and a spar cap extension (10) attached to the spar cap (20), wherein the spar cap extension (10) comprises a channel (100) formed along an outer face (10F) of the lateral extension (10) and extending between outer ends (10R, 10T) of the spar cap extension (10); and an optical fibre cable (30) of an optical sensing system (3) contained in the channel (100). The invention further describes a method of manufacturing such a spar cap assembly (1).

## Description

### Background

The rotor blades of a wind turbine are generally equipped with various sensors so that loads acting on a rotor blade and the structural health of a rotor blade can be monitored. The long rotor blades of a multi-gigawatt wind turbine can be subject to very high loads, and are therefore generally equipped with many sensors, for example optical fibre cables with Bragg grating sensors that are used to measure relevant parameters such as strain. Such an optical fibre cable (incorporating any number of sensors) can be secured to the surface of any rotor blade component that will undergo deformation when loaded. Alternatively, to avoid damage to the optical fibre cable, it can be embedded in a component, for example in the rotor blade shell, in a spar cap, etc. The spar caps, which are prefabricated composites, are usually arranged at their intended positions along the main spar of the rotor blade during the layup stages. Therefore, if a spar cap is to support an optical fibre cable, this must be attached to or embedded in the spar cap prior to the layup procedure.

In one approach, an optical fibre cable (incorporating any number of sensors) is embedded between sheets of carbon fibre reinforced polymer (CFRP) during manufacture of the spar cap. This can be done manually or in an automated manner. For example, CFRP sheets and a number of optical fibre cables can be unrolled from spools and arranged in the desired order using a custom-built apparatus. The spar cap layup is then arranged on a mould table and bagged in preparation for a resin infusion step. After infusion and curing of the spar cap, the position of the embedded optical fibre cable is fixed. Embedding optical fibre cables can be considered advantageous for a number of reasons: the robustness of the overall sensor assembly is improved; handling of the sensor assembly is simplified during rotor blade layup; the rotor blade manufacturing cycle time is reduced; optical fibre cables can be positioned accurately relative to the rotor blade; the optical fibre cables are protected from damage through wrong handling or by being inadvertently stepped on during manufacturing.

However, the known techniques of embedding optical fibre cables in spar caps also have a number of problems. Since an optical fibre cable needs to be positioned between thin CFRP sheets, which are slippery until bonded by resin, it can be difficult to place the optical fibre cables correctly and to ensure that they remain in their intended position during the infusion and curing steps. In an automated embedding technique as described above, in which the cables and carbon-fibre sheets are unrolled from spools, there can be an increased likelihood of damage to an optical fibre cable.

Furthermore, since the optical fibre cable has a certain thickness, its presence between thin CFRP sheets can inhibit resin flow during infusion and can result in air gaps remaining after the curing step. Furthermore, during the infusion and curing steps, any inadvertent movement or slippage of the relatively rigid cables can cause wrinkles in the thin CFRP sheets, which may also result in air gaps, wrinkles, etc. Such defects can significantly reduce the structural integrity of a spar cap manufactured in this way.

It is therefore an object of the invention to overcome the problems outlined above.

This object is achieved by the claimed spar cap assembly, by the claimed method of manufacturing such a spar cap assembly, and by the claimed method of manufacturing a wind turbine rotor blade including such a spar cap assembly.

### Description

In the following, without restricting the invention in any way, it may be assumed that the claimed spar cap assembly is dimensioned for use in a wind turbine rotor blade incorporating a spar in its interior. The spar of a wind turbine rotor blade generally comprises a shear web, a spar cap at the pressure side of the rotor blade and another spar cap at the suction side. A spar cap of a long wind turbine rotor blade can be made in one piece (from root to tip), or can comprise sections.

According to the invention, the spar cap assembly comprises a spar cap with an essentially rectangular cross-sectional shape, and at least one spar cap extension bonded to a long side face of the spar cap. The spar cap assembly can comprise two such spar cap extensions, one on each long side of the spar cap. A spar cap extension comprises a groove or channel formed along an outer face and extending between the root end and the tip end of the spar cap extension. An optical fibre cable of an optical sensing system is completely contained in the channel. An instance of the claimed spar cap assembly can be deployed at the pressure side and/or at the suction side of the rotor blade spar.

An advantage of the inventive spar cap assembly is that it provides a favourably low-cost way of incorporating one or more optical fibre cables in a wind turbine rotor blade. This is because the spar cap can be a simple off-the-shelf composite that can be produced using known moulding techniques without any costly modifications. Instead, the optical fibre cables of the inventive spar cap assembly are incorporated in relatively cheap additions or extensions to a spar cap and are included in the rotor blade layup along with the spar cap. On account of their positions alongside or on the spar cap, the extensions do not need to contribute to the structural strength of the spar. The spar cap itself shall be understood to comprise resin-bonded layers of reinforcing fibre material, for example carbon-fibre reinforcing material (CFRM), and can have a simple shape, for example a rectangular cross-section along its length and minor variations in width. The spar cap thickness may be greatest in the mid-span region of the rotor blade, and can decrease gradually towards an outer end (root and/or tip) of the rotor blade.

The inventive method of manufacturing such a spar cap assembly comprises steps of forming a spar cap extension with dimensions based on the dimensions of a spar cap; forming a channel along an outer face of the spar cap extension; arranging an optical fibre cable of an optical sensing system in the channel; sealing the optical fibre cable in the channel; and attaching the spar cap extension to the spar cap.

An advantage of the inventive approach is that any number of optical fibre cables are easily integrated into a spar cap structure without affecting the manufacture of the spar cap itself, i.e. the spar cap remains uncompromised by defects such as air gaps or other discontinuities. The spar cap of the inventive assembly is therefore more robust than a prior art spar cap with embedded optical fibre cables.

The inventive method of manufacturing a wind turbine rotor blade comprises assembling layers of reinforcing material in a mould to form the pressure side layup and suction side layup of the rotor blade. During the layup stage(s), an instance of the inventive spar cap assembly is incorporated in one or both sides of the rotor blade, on either side of the shear web. For example, an instance of the inventive spar cap assembly can be placed at the pressure side of the shear web, and another instance of the inventive spar cap assembly can be placed at the suction side of the shear web. The inventive spar cap assembly increases the efficiency and reduces the costs of the rotor blade manufacturing procedure, since the embedded optical fibre cables and the spar cap are incorporated in the layup in a single process step. The optical fibre cable contained in a channel in a lateral extension of a spar cap assembly can be connected to an optical sensing system of a wind turbine equipped with one or more such rotor blades. During operation of the wind turbine, data collected by optical sensors and transmitted via the embedded optical fibre cable can then be evaluated, for example to estimate the loads acting on the respective rotor blade(s) .

Particularly advantageous embodiments and features of the invention are given by the dependent claims, as revealed in the following description. Features of different claim categories may be combined as appropriate to give further embodiments not described herein.

A spar cap extension shall be understood as a part that is attached to a face of the spar cap so that the relevant dimension of the spar cap is extended. In the following, a spar cap extension may be assumed to be attached to a side edge of a spar cap, since the resulting shape of the spar cap assembly (which is no thicker than the spar cap, just wider) can be relatively easy to incorporate into the pressure side or suction of the rotor blade layup. While various other arrangements are possible, for example a spar cap extension might be attached to the top or bottom face of a spar cap, in the following it may be assumed that a spar cap extension is a "lateral extension", i.e. a part that is bonded to a long side edge of the spar cap. In the following, the expressions "spar cap extension", "lateral extension" and simply "extension" shall be understood to be synonyms and may be used interchangeably.

In the following, without restricting the invention in any way, it may be assumed that the dimensions of the lateral extension are based on the dimensions of the spar cap, i.e. the length and height of the lateral extension can be understood to correspond to the length and height of the spar cap. A lateral extension of the inventive spar cap assembly can be a simple part with a rectangular cross-section and straight sides. Equally, the thickness of a lateral extension can decrease with increasing distance from the spar cap, so that the laterally tapered extension can be embedded with ease in the rotor blade layup. As indicated above, the thickness of the spar cap can decrease towards the root end and the tip end of the rotor blade. Since a lateral extension is attached to the long side edge of a spar cap, the thickness of the lateral extension can similarly decrease towards the root end and the tip end of the rotor blade, so that the thickness of the lateral extension does not exceed the thickness of the spar cap.

The "outer face" of an extension shall be understood as the face in which a channel is formed to receive an optical fibre cable. Of course, this "outer face" may, at some point during manufacture of a rotor blade, be concealed from view.

In a preferred embodiment of the invention, a spar cap extension comprises any of: balsa wood, polyethylene terephthalate, structural foam, etc., since the extension itself is not required to contribute to the structural strength of the wind turbine rotor blade. An extension can be attached to a spar cap in any suitable manner, for example by an adhesive bond, a resin bond, a mechanical joint, etc. In a particularly preferred embodiment of the invention, an extension is attached to a spar cap by co-bonding or co-infusion.

The optical fibre cable of an optical sensing system must be connected in some way to a data acquisition unit or "interrogator" comprising various photonic components such as an optical power source and a photodetector. The free end (cable tip) of the optical fibre cable can later be attached to the data acquisition unit of the optical sensing system using a suitable optical fibre connector placed over the cable tip.

In one possible approach, the channel in a spar cap extension can be formed so that a free end of the optical fibre cable extends some distance beyond the end of the spar cap extension. However, any such additional free length of cable can complicate the layup procedure when manufacturing the rotor blade. Therefore, in a particularly preferred embodiment of the invention, a recess is formed near an outer end (e.g. the root end) of a spar cap extension, with dimensions that correspond to the dimensions of a connection box which can then be fitted into the recess. An optical fibre connection box can have any shape (e.g. rectangular or round), with a lid that can be opened to access an interior cavity. A connection box is generally equipped with at least one cable gland in a side face. In the inventive method, such a cable gland is used to secure an outer end of the embedded optical fibre cable to the connection box. In a preferred embodiment of the invention, the free end of an optical fibre cable is fastened to the gland of a connection box before fitting the connection box and the optical fibre cable into the respective recess and channel of the spar cap extension.

An optical fibre cable can be embedded in a spar cap extension in various different ways. For example, in a preparatory step, the channel can be lined with at least one layer of reinforcing fibre material, and the optical fibre cable can be arranged in the lined channel. During subsequent resin infusion and curing of the spar cap assembly, the optical fibre cable becomes permanently bonded to the channel. Alternatively, the optical fibre cable first be embedded in a composite rod and/or in a plastic housing, and such a rod or housing can be dimensioned to fit into the channel or into a lined channel. Again, during subsequent resin infusion and curing of the spar cap assembly, the rod or housing is permanently bonded to the channel.

A connection box can be embedded in a recess in a similar manner, for example by lining the recess with one or more layers of reinforcing fibre material so that, during subsequent resin infusion and curing steps, the connection box becomes permanently bonded to the recess.

After the above described steps of arranging an optical fibre cable in a channel, positioning the desired number of connection boxes in suitably placed recesses, and securing a lateral extension along one side of the spar cap, the inventive spar cap assembly is completed by covering at least the outer face of the lateral extension(s) with at least one layer of reinforcing fibre material (RFM). Of course, the RFM layer(s) may extend all about the spar cap and its lateral extensions if desired. Subsequently, after placing the assembly on a suitable moulding table, bagging it and connecting the vacuum bags to resin inlets and outlets, resin infusion and curing steps are performed to obtain a spar cap assembly that is at least partially sheathed in a resin-infused layer of reinforcing fibre material.

The complete spar cap assembly can then be handled without any need to take particular care, since the optical fibre cable(s) are safely contained beneath a protective layer of reinforced material. This hardened outer layer also covers the connection box(es). Therefore, in a later stage, access is obtained to the interior of a connection box by cutting a suitably-sized opening through the hardened outer layer so that the lid of a connection box can be opened. The embedded optical fibre cable (which is secured to the connection box by a cable gland as described above), can be connected to the optical sensing system by any suitable means, for example by means of a splice connection. This step of connecting an embedded optical fibre cable to the optical sensing system can be done before or after resin infusion of the rotor blade layup. In the prior art, as explained above, damage to the optical fibre cable can frequently occur during the manufacturing stage from being inadvertently stepped on and/or from incorrect handling; damage to the optical fibre cable can later occur due to impacts on the rotor blade. The inventive approach neatly overcomes these problems since the embedded optical fibre cable is protected from damage during the rotor blade manufacturing stage and is also protected from rotor blade impact damage since it is well below the rotor blade "skin".

In a particularly preferred embodiment of the invention, the optical fibre cable can comprise multiple sensors at various positions along its length, for example Bragg gratings, Fabry-Perot interferometers, etc. In an exemplary embodiment, a spar cap is flanked on each of its long sides by a spar cap extension, each extension containing an embedded optical fibre cable with a plurality of Bragg gratings spaced at intervals along the cable.

Alternatively or in addition to sensors along an optical fibre cable embedded in the spar cap assembly, a wind turbine rotor blade may comprise any number of sensors (located elsewhere in the rotor blade) that can be included in the optical sensing system. Additional sensors can be strain sensors, accelerometers, temperature sensors, etc., and it is usual to incorporate load sensors in or on the rotor blade shell. Any of these can be realised as optical sensors, and it is known to connect such optical sensors using cables arranged in the interior of the rotor blade. Problems known from the prior art can arise from poor bonding of an embedded load sensor due to irregularities in the rotor blade surface, dirt in the connection between cable tip and interrogator, etc. Therefore, in a preferred embodiment of the invention, an optical fibre cable of a spar cap assembly can comprise two or more separate sections to facilitate placement of a branch connection box between these sections. Preferably, a branch connection box comprises three cable glands and space to accommodate a T-connection. In this way, the sections of the embedded optical fibre cable can be connected "in line", and an external optical fibre cable can also be connected. An embedded optical fibre cable can be "interrupted" by multiple such branch connection boxes so that a corresponding number of external optical fibre cables (leading to further sensors) can be connected to the optical sensing system. As described above, branch connection boxes are initially concealed beneath a protective layer of cured RFM, and a suitably-sized opening must be made through that (generally translucent) hardened outer layer so that the lid of a branch connection box can be opened. Again, the step of connecting an external sensor between sections of an embedded optical fibre cable can be done before or after resin infusion of the rotor blade layup.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a cross-section through a wind turbine rotor blade;
Figures 2 - 10 show various embodiments of the inventive spar cap assembly;
Figure 11 shows a prior art spar cap.

In the diagrams, like numbers refer to like objects throughout. Objects in the diagrams are not necessarily drawn to scale.

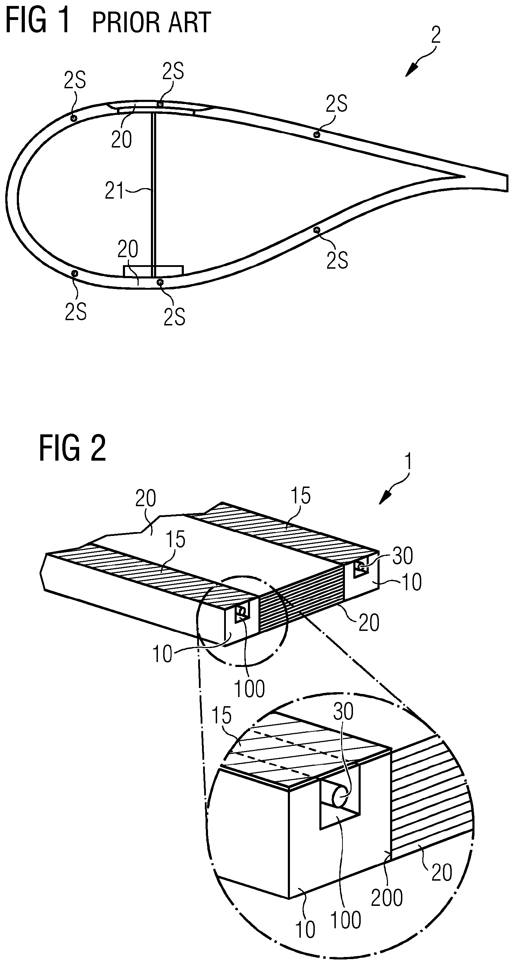

Figure 1 shows a cross-section through a wind turbine rotor blade 2, showing how a spar 20, 21 may be placed in the interior of the rotor blade 2. The spar comprises a shear web 21 placed transverse to the airfoil chord plane, and spar caps 20 at either end of the shear web 21. The purpose of the spar 20, 21 is to ensure that the rotor blade 2 can withstand high loads during operation of the wind turbine, and the spar caps 20 can be made of strong material such as CFRP. As explained above, it is generally desirable to arrange sensors 2S at various positions in or on the rotor blade 2 so that valuable data can be collected and evaluated during the service lifetime of the rotor blade 2. The data collected by the sensors can provide information about the current loads acting on the rotor blade 2 and about the structural health of the rotor blade 2. Since the spar caps 20 are generally prefabricated parts, it is known to embed optical fibre cables inside the spar caps 20 in order to deploy Bragg grating sensors or similar. However, as explained above, the known solutions of manufacturing spar caps with optical fibre cables embedded within the layers of CFRP are costly, and air pockets or other defects in the CFRP layers can weaken the spar caps 20, thus reducing the service lifetime of the rotor blade.

Figures 2 - 5 show various embodiments of the inventive spar cap assembly 1, showing how an optical fibre cable 30 may be embedded. The diagrams show a spar cap 20 in the form of a simple CFRP block 20, with a lateral spar cap extension 10 on each long side. Each lateral extension 10 can be made of one or more suitable "core" materials such as balsa wood, structural foam, polyethylene terephthalate, a fibre-reinforced polymer, a non-reinforced polymer, a ceramic etc. Her, the shape of an extension 10 is a straightforward rectangular shape, but it shall be understood that other shapes are possible, for example a triangular shape that tapers off with increasing distance from the spar cap.

A suitably-shaped channel 100 is formed in a lateral extension 10 to receive an optical fibre cable; recesses are formed at various positions to receive the desired number of connection boxes.

In each case, manufacture of a spar cap assembly 1 is made by arranging a spar cap 20 and any extensions 10 side by side. Fiberglass mats can be placed as appropriate on one or more outer surfaces of the assembly, which is then placed in a vacuum bag. In a subsequent step, each lateral extension is securely bonded to the spar cap using a suitable technique such as resin-infusion, co-curing (a lateral extension and the spar cap are held together by an adhesive film and simultaneously cured), co-bonding (the uncured or partially cured lateral extension is laid up against the cured spar cap, or vice versa, and the two parts are bonded by an adhesive), etc. In one approach, a spar cap extension is "empty" when bonded to the spar cap: i.e. its channel is empty, and the optical fibre cables and connection boxes are installed and sealed at a later stage. In another approach, the optical fibre cables and connection boxes are installed and sealed in the channel of a spar cap extension before this is bonded to the spar cap, so that preparation of the inventive spar cap assembly requires fewer process steps.

The diagrams also show a channel 100 formed in an outer face 10F of each extension 10, and an optical fibre cable 30 embedded in each channel 100. An enlarged view of an embedded optical fibre cable 30 is shown on the right-hand side of each diagram.

In Figure 2, the optical fibre cable 30 is placed in a channel 100, and a glass fibre layer 15 is placed over the upper surface 10F of the extension 10 to seal the cable 30 in the channel 100.

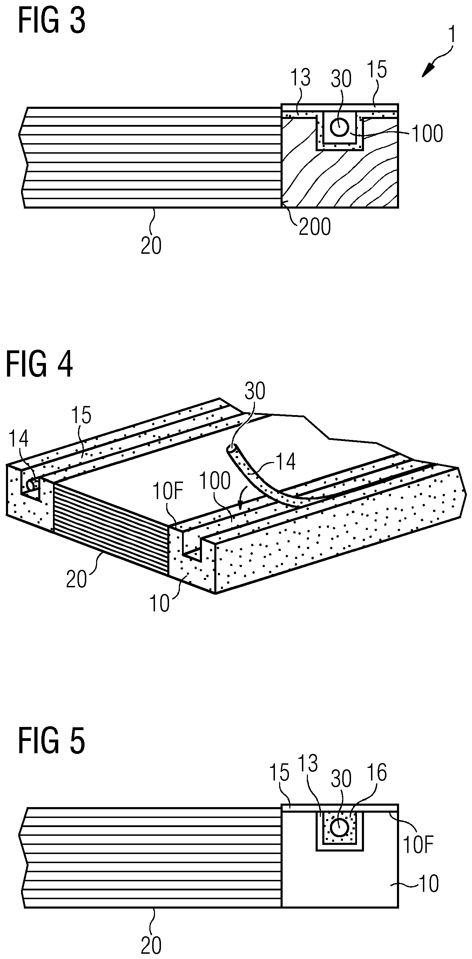

In Figure 3, a first glass fibre layer 13 is arranged to line the channel 100. An optical fibre cable 30 is then placed into the lined channel 100. A second glass fibre layer 15 is then placed over the extension 10 to cover the outer face 10F and the channel 100 with its optical fibre cable 30. The diagram indicates that the lateral extension may be formed from balsa wood.

For the embodiment shown in Figure 4, a composite rod 14 is manufactured in a preliminary step, to embed an optical fibre cable 30 in a glass fibre sheath 15. In a subsequent step, the composite rod 14 (which is preferably at least as flexible as the spar cap) is placed in the channel 100, and a glass fibre layer 15 is then placed over the outer face 10F to also cover the channel 100 and the composite rod 14. The diagram indicates that the lateral extension may be formed from a suitable polymer.

For the embodiment shown in Figure 5, an optical fibre cable 30 is sheathed in a plastic housing 16 in a preliminary step. The plastic housing 16 can have the same length as the channel 100, and its width and height can be smaller than the channel 100 so that the channel 100 can be lined with a first glass fibre layer 13 before placing the housing 16 and its embedded optical fibre cable 30 into the channel 100. A second glass fibre layer 15 is then placed over the outer face 10F of the lateral extension 10.

In each case, resin infusion and curing steps are then performed and, after curing is complete, the spar cap assembly 1 can be included in the usual manner in the layup procedure of a wind turbine rotor blade mould.

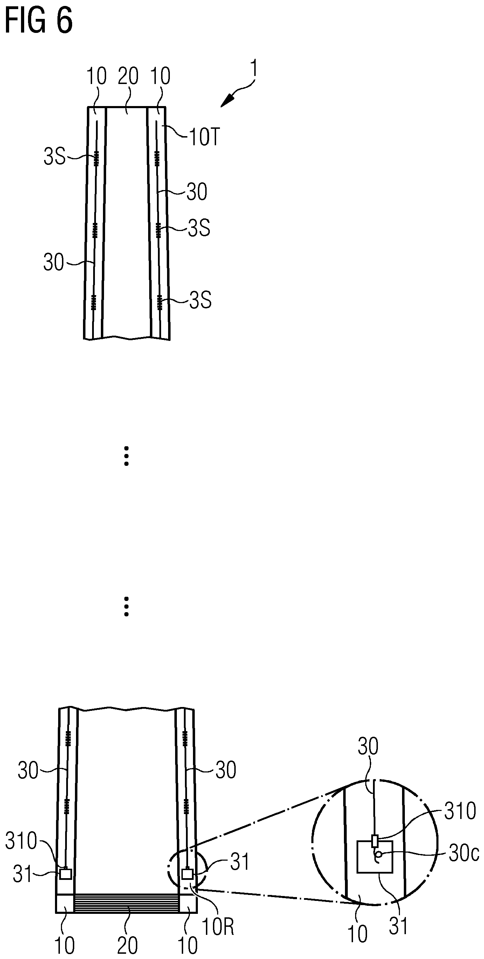

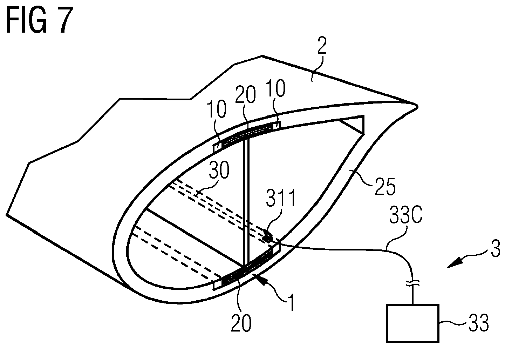

Figure 6 and Figure 7 show a further aspect of the inventive spar cap assembly 1, namely provisions for connecting an embedded optical fibre cable 30 to an acquisition device 33. To this end, a connection box 31 is embedded in an extension 10, for example at the inboard end 10R of the spar cap assembly 1. A cable gland 310 at one side of the box 31 is connected to the optical fibre cable 30 (before or after placing the cable 30 in the channel 100). In Figure 6, a short connecting length 30C of optical fibre cable is deposited in the box 31, and connected to the cable gland 310. In a later step, this connecting length 30C can for example be spliced to an optical fibre cable coming from an acquisition device.

Prior to the final infusion step explained in Figures 2 - 5 above, a lid 311 is placed on the connection box 31, which is then sealed shut using a suitable sealant or adhesive. The final infusion step is then carried out to complete the spar cap assembly 1.

After curing a rotor blade with one or more such spar cap assemblies 1 embedded in the layup 25, the optical fibre cables 30 can be connected to an acquisition device 33 or "interrogator" as illustrated in Figure 7. To this end, a connection box 31 is opened by forming a suitably-sized hole (e.g. by drilling or cutting) in the cured fibreglass layer(s) to expose the connection box lid 311 which can then be opened to access the connecting length 30C of optical fibre cable, which can then be joined to the acquisition device 33. For example, the connecting length 30C can be attached to an external length 33C by means of a cable gland arranged in the connection box lid 311, allowing the box 31 to be closed again.

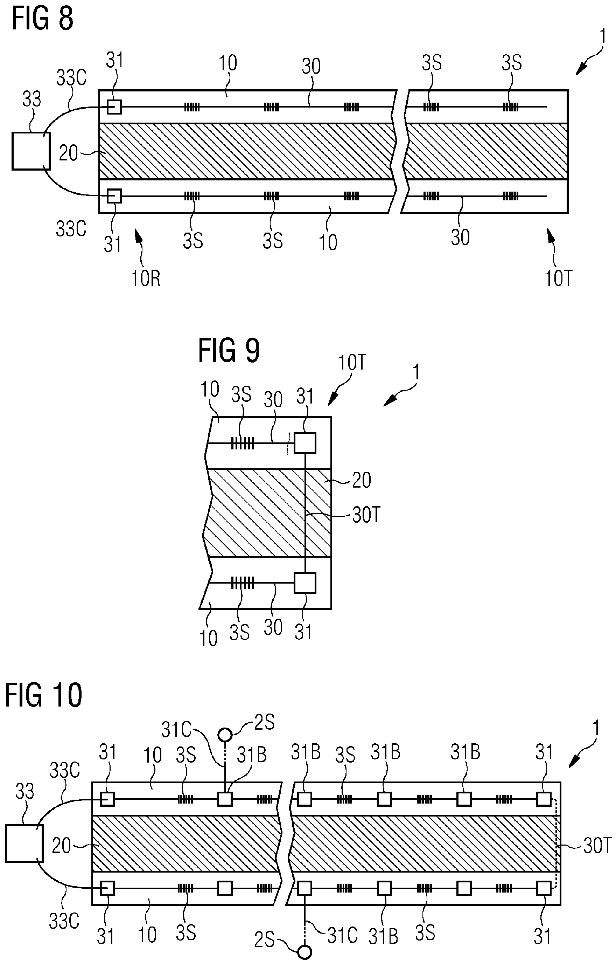

Figure 8 shows a schematic plan view of an embodiment of the inventive spar cap assembly 1, showing two embedded optical fibre cables 30 alongside the CFRP spar 20, each equipped with several sensors 3S which can be interrogated in reflection, for example fibre Bragg gratings, Fabry-Perot interferometers, etc. The diagram also shows embedded connection boxes 31 at the inboard end 10R of the spar cap assembly 1. After connecting the embedded optical fibre cables 30 to an acquisition device 33 as described above, the sensors 3S of each optical fibre cable 30 can be interrogated in reflection.

Figure 9 shows a further elaboration of the embodiment of Figure 8, deploying sensors 3S which can be interrogated in transmission, for example long period gratings or power-based sensors. To this end, each of two optical fibre cables 30 terminates in an embedded connection box 31 placed at the outboard end 10T of the extension 10, and a further transverse length 30T of optical fibre cable is connected between these in the manner explained in Figure 7. After connecting the embedded optical fibre cables 30 to an acquisition device 33, the sensors 3S can be interrogated in transmission.

Figure 10 shows a further elaboration of the embodiment of Figure 8. Here, in addition to the connection boxes 31 at the outer end(s) 10R, 10T of the extensions 10, several branch connection boxes 31B are embedded at various points along the spar cap assembly 1. These branch connection boxes 31B allow various other sensors 2S (e.g. accelerometers, temperature sensors, strain sensors, etc.) arranged at other points in the rotor blade 2 (e.g. in the rotor blade shell, in the shear web, etc.) to be connected via external cable portions 31C and the embedded optical cables 30 to the optical sensing system 3. By providing cable glands at several sides of a branch connection box 31B and providing suitable connecting sections 31C, each of the additional sensors 2S can be interrogated by the optical sensing system 3 as described above.

As explained in Figure 9, the embodiment of Figure 10 can be adapted for sensors that must be interrogated in transmission, by providing connection boxes at the outboard end 10T of the spar cap assembly 1 and connecting these by a transverse length 10T of optical fibre cable.

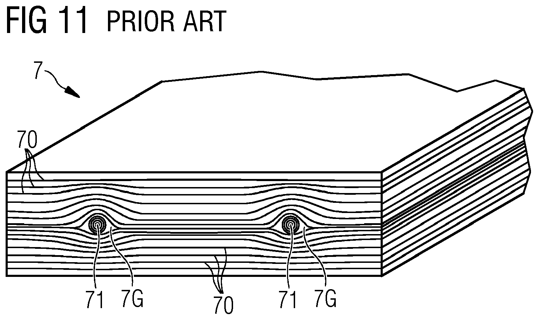

Figure 11 shows a perspective view of a prior art spar cap 7 in which optical fibre cables 71 are embedded between CFRP sheets 70. As explained in the introduction, the optical fibre cables 71 can be manually positioned between the CFRP layers 70, or a dedicated tool can be deployed to form the spar cap layup including the optical fibre cables 71. This prior art spar cap 7 can reliably protect the optical fibre cables 71 from damage. However, the spar cap 7 itself can exhibit poorer performance than a "plain" spar cap (a block of cured CFRP sheets without any embedded elements), since the optical fibre cables 71 can interrupt the resin flow during the infusion step, resulting in air gaps 7G that have a detrimental effect on the structural strength of the spar cap 7.

Although the present invention has been disclosed in the form of preferred embodiments and variations thereon, it will be understood that numerous additional modifications and variations could be made thereto without departing from the scope of the invention. For example, a spar cap as described above is generally a one-piece component with a simple rectangular shape and with its central axis arranged above the shear web, and the inventive spar cap assembly can comprise a lateral extension bonded to a side edge of the spar cap. However, in an alternative approach, it may be preferred to provide two parallel spar caps, with a lateral extension "sandwiched" between them and bonded to a side edge of each spar cap.

For the sake of clarity, it is to be understood that the use of "a" or "an" throughout this application does not exclude a plurality, and "comprising" does not exclude other steps or elements.

## Claims

1. A spar cap assembly (1) comprising
- a spar cap (20) and
- a spar cap extension (10) attached to the spar cap (20), wherein the spar cap extension (10) comprises
- a channel (100) formed along an outer face (10F) of the lateral extension (10) and extending between outer ends (10R, 10T) of the spar cap extension (10); and
- an optical fibre cable (30) of an optical sensing system (3) contained in the channel (100).

2. A spar cap assembly according to the preceding claim, wherein the spar cap extension (10) is attached to a side face of the spar cap (20).

3. A spar cap assembly according to any of the preceding claims, wherein the spar cap extension (10) is attached to the spar cap (20) by any of: an adhesive bond, a resin bond, a mechanical joint; and/or by any of: a co-curing step, a co-bonding step.

4. A spar cap assembly according to any of the preceding claims, wherein the spar cap extension (10) comprises a recess accommodating a connection box (31, 31B) of the optical sensing system (3).

5. A spar cap assembly according to any of the preceding claims, wherein the optical fibre cable (30) comprises two or more sections, and wherein the spar cap assembly (1) further comprises a branch connection box (32) arranged in a recess between consecutive sections of the optical fibre cable (30).

6. A spar cap assembly according to any of the preceding claims, comprising a number of sensors (3S) arranged along the optical fibre cable (30).

7. A method of manufacturing a spar cap assembly (1) according to any of claims 1 to 6, which method comprises
- forming a spar cap extension (10) with dimensions (20L, 20H) based on the dimensions of a spar cap (20);
- forming a channel (100) along an outer face (10F) of the spar cap extension (10);
- arranging an optical fibre cable (30) of an optical sensing system (3) in the channel (100);
- sealing the optical fibre cable (30) in the channel (100); and
- attaching the spar cap extension (10) to the spar cap (20) .

8. A method according to the preceding claim, comprising a preparatory step of lining the channel (100) with at least one layer (13) of reinforcing fibre material.

9. A method according to claim 7 or claim 8, comprising a preparatory step of embedding the optical fibre cable (30) in a composite rod (14) and/or a plastic housing (16) dimensioned to fit into the channel (100).

10. A method according to any of claims 7 to 9, comprising the steps of
- providing a connection box (31, 31B) with a cable gland (310) in a side wall;
- connecting the optical fibre cable (30) to the connection box (31) by means of the cable gland (310);
- forming a recess in the spar cap extension (10); and
- arranging the connection box (31) in the recess.

11. A method according to any of claims 7 to 10, comprising the steps of
- covering at least the outer face (10F) of the spar cap extension (10) with at least one layer (15) of reinforcing fibre material;
- performing resin infusion and curing to harden the protective layer (15).

12. A method according to any of claims 7 to 11, comprising a step of forming an opening in the protective layer (15) to expose a connection box (31).

13. A method of manufacturing a wind turbine rotor blade (2), comprising steps of
- assembling layers of reinforcing material to form a shell layup (25); and
- arranging a spar cap assembly (1) according to any of claims 1 to 6 in the shell layup (25).

14. A method according to the preceding claim, comprising a step of connecting an embedded optical fibre cable (30) to an optical sensing system (3) of the wind turbine rotor blade (2) .

15. A method according to claim 13 or claim 14, comprising a step of connecting a sensor (2S), located elsewhere in the rotor blade (2), to the optical sensing system (3) via a branch connection box (31B) between sections of an embedded optical fibre cable (30) of a spar cap assembly (1).
